# EUROPÄISCHE PATENTSCHRIFT

(11) **EP 3 091 394 B1**
(45) Veröffentlichungstag und Bekanntmachung des Hinweises auf die Patenterteilung: **24.07.2019**
(21) Anmeldenummer: 16168025.1
(22) Anmeldetag: 03.05.2016
(51) Int. Cl.: G03B 37/00, E03F 7/12, E03F 9/00, B05B 1/14, B05B 13/06, B08B 9/049, G01N 21/954

(54) **SPÜLKOPF**
FLUSHING HEAD
TÊTE D'INJECTION

(30) Priorität: 06.05.2015 DE 202015102328 U
(43) Veröffentlichungstag der Anmeldung: 09.11.2016
(73) Patentinhaber: iPEK International GmbH, 87477 Sulzberg (DE)
(72) Erfinder: Zahnd, Fabian, 87437 Kempten (DE); Henn, Peter, 87452 Krugzell (DE)
(74) Vertreter: 2s-ip Schramm Schneider Bertagnoll Patent- und Rechtsanwälte Part mbB

(56) Entgegenhaltungen:
- DE-A1- 4 114 601
- DE-A1- 10 255 221
- DE-A1- 19 607 913
- DE-U1-202011 000 650
- DE-U1-202014 100 229

## Beschreibung

### Gebiet der Erfindung

Die Erfindung betrifft einen Spülkopf für ein Kanal- bzw. Rohrinspektionssystem, wobei der Spülkopf eine Bildaufnahmeeinrichtung und eine Spüleinrichtung mit einer Anzahl von Spüldüsen und einer Druckwassereintrittsöffnung aufweist.

### Hintergrund der Erfindung

Im Bereich der Kanalinspektion und/oder Kanalreinigung ist es bekannt, Kanalinspektionssysteme bzw. Kanalreinigungssysteme zu verwenden, die in den zu inspizierenden zu reinigenden Kanal eingebracht werden können und im Kanal verfahren werden können. Zur Reinigung von Kanälen ist es beispielsweise bekannt Spülköpfe zu verwenden, an die ein Hochdruckspülschlauch angeschlossen werden kann. Der Wasseraustritt aus nach hinten gerichteten Spüldüsen bewirkt einen Vorschub des Spülkopfes in dem Kanal. Beim Herausziehen des Spülkopfes aus dem Kanal bewirkt der Wasseraustritt ein Reinigen des Kanals.

Ferner ist es bekannt, an dem Spülkopf eine Bildaufnahmeeinrichtung anzuordnen, mit der das Innere des Kanals während eines Spülvorganges optisch inspiziert werden kann. Die Bilddaten der Bildaufnahmeeinrichtung müssen während des Spülvorganges an eine Anzeigeeinrichtung außerhalb des Kanals übertragen werden. Hierzu ist es bekannt, den Spülkopf bzw. die Bildaufnahmeeinrichtung des Spülkopfes über eine Kabelverbindung mit der Anzeigeeinrichtung zu verbinden. Nachteilig bei der Datenübertragung über Kabelverbindungen ist allerdings, dass die Kabelverbindungen durch den Einsatz in einer rauen Umgebung bei Kanalinspektionen bzw. Kanalreinigungen einem hohen Verschleiß unterliegen und leicht beschädigt werden können, was einen teilweisen oder kompletten Austausch der Kabelverbindungen erforderlich machen kann. Es ist daher notwendig, die Kabel bzw. Kabelverbindungen mit einer stabilen und weitgehend verschleiß freien Ummantelung zu versehen, was allerdings ein hohes Zusatzgewicht und hohe Zusatzkosten der Kabel mit sich bringt.

Ein weiterer wesentlicher Nachteil besteht darin, dass das Kabel während einer Kanalinspektion bzw. während einer Kanalreinigung vorzugsweise von einer Kabeltrommel abgewickelt bzw. auf die Kabeltrommel aufgewickelt werden muss. Das Ab- bzw. Aufwickeln des Kabels ist insbesondere dann problematisch, wenn das Kabel gleichzeitig mit einem Hochdruckschlauch in ein Kanalrohr eingebracht werden muss. Dies führt einerseits zu erhöhten Rüst- bzw. Einsatzzeiten. Andererseits kann das Einbringen des Kabels zusammen mit dem Spülschlauch in ein Kanalrohr den Verschleiß des Kabels negativ beeinflussen. Es wurde versucht, dieses Problem zu lösen, indem das Kabel in den Spülschlauch, beispielsweise in den Spülschlauchmantel integriert wurde. Dies hat allerdings den Nachteil, dass bei einem Defekt des in den Spülschlauch integrierten Kabels im ungünstigsten Fall der gesamte Spülschlauch ausgewechselt werden muss.

Beim Einsatz von Kanalinspektionssystemen bzw. Kanalreinigungssystemen in explosionsgeschützten Bereichen muss zudem gewährleistet sein, dass die Kabel nicht beschädigt sind bzw. während des Einsatzes nicht beschädigt werden.

Aus der DE 102 55 221 A1 ist ein Spülkopf mit einer Spüleinrichtung bekannt. Die Spüldüsen sind hierbei schräg nach hinten ausgerichtet in der Spüleinrichtung angeordnet, um einen bestimmten Vortrieb / bestimmtes Reinigungsverhalten zu erzielen. Die Spüldüsen bzw. die Wasseraustrittsöffnungen der Spüldüsen sind hierbei ganz hinten an der Spüleinrichtung angeordnet. Die Spüleinrichtung des Spülkopfes, in dem sich die Spüldüsen befinden, weist eine im Wesentlichen zylindrische Form.

Aus der DE 196 07 913 A1 ist ebenfalls ein Spülkopf mit einer Spüleinrichtung bekannt. Dieser Spülkopf wiest im wesentlich die gleiche geometrische Form auf, wie der aus der DE 102 55 221 A1 bekannte Spülkopf. Die Spüleinrichtung des Spülkopfes ist im Wesentlichen zylinderförmig ausgestaltet und die Spüldüsen bzw. die Wasseraustrittsöffnungen der Spüldüsen sind ganz hinten an dieser Spüleinrichtung angeordnet.

### Aufgabe der Erfindung

Aufgabe der vorliegenden Erfindung ist es daher, die vorstehend genannten Nachteile zumindest teilweise zu vermeiden und einen Spülkopf bereitzustellen, mit dem eine zuverlässige und einfache Inspektion eines Kanals während eines Reinigungsvorganges gewährleistet wird.

### Erfindungsgemäße Lösung

Erfindungsgemäß wird diese Aufgabe mit einem Spülkopf nach dem unabhängigen Anspruch gelöst. Vorteilhafte Weiterbildungen und Ausgestaltungen der Erfindung sind in den abhängigen Ansprüchen angegeben.

Spülkopf für ein Kanal- bzw. Rohrinspektionssystem, umfassend eine an dem vorderen Ende (VE) angeordnete Bildaufnahmeeinrichtung und eine axial hinter der Bildaufnahmeeinrichtung angeordnete Spüleinrichtung, wobei
- die Spüleinrichtung eine Anzahl von Spüldüsen aufweist, deren Wasseraustrittsöffnungen auf der Mantelfläche der Spüleinrichtung in Umfangsrichtung beabstandet zueinander angeordnet sind, wobei die Spüldüsen über zumindest einen Wasserkanal mit einer an dem hinteren Ende der Spüleinrichtung vorgesehenen Druckwassereintrittsöffnung verbunden sind,
- in dem Spülkopf ein WLAN-Modul angeordnet ist, das operativ mit einem Kameramodul der Bildaufnahmeeinrichtung gekoppelt ist,
- axial hinter den Spüldüsen eine Antenneneinheit des WLAN-Moduls angeordnet ist, wobei die Antenneneinheit zumindest eine Antenne umfasst, wobei die zumindest eine Antenne zumindest teilweise radial um die Druckwassereintrittsöffnung angeordnet ist,
- die zumindest eine Antenne an der Rückseite der Spüleinrichtung angeordnet ist, und
- das WLAN-Modul und die Antenneneinheit angepasst sind, von dem Kameramodul bereitgestellte Bild- und/oder Videodaten kabellos an eine Bedien-/Anzeigeeinrichtung zu übertragen,
- an der Rückseite der Spüleinrichtung eine Kunststoff aufweisende Abdeckung vorgesehen ist, zum Abdecken der Antenneneinheit, und
- die Mantelfläche der Spüleinrichtung die Form einer Sanduhr aufweist, wobei sich die Spüleinrichtung von dem hinteren Ende und von dem vorderen Ende her in axialer Richtung verjüngt und wobei die Wasseraustrittsöffnungen der Spüldüsen auf der Mantelfläche des sich von dem vorderen Ende her in axialer Richtung verjüngenden Abschnittes der Spüleinrichtung angeordnet sind.

Weil die Antenneneinheit axial hinter den Spüldüsen angeordnet ist, wird der Einfluss des aus den Spüldüsen austretenden Spülwassers auf die Übertragungsqualität der WLAN-Verbindung erheblich reduziert. Die Sendeleistung kann so entsprechend niedrig gehalten werden kann. Ferner wird durch Anordnung der zumindest einen Antenne an der Rückseite der Spüleinrichtung erreicht, dass die effektiv wirksame Antennenfläche maximiert werden kann. Die Kunststoffabdeckung gewährleistet, dass die Antennen nicht beschädigt oder durch mechanische Einflüsse, etwa Steinschlag, beeinträchtigt werden. Weil die Abdeckung aus Kunststoff ist, wird die Sende-/Empfangsqualität nicht merklich beeinflusst.

Das WLAN-Modul kann axial hinter den Spüldüsen oder in der Bildaufnahmeeinrichtung angeordnet sein.

In der Wandung der Spüleinrichtung kann ein Kabelkanal ausgebildet sein, der von der Rückseite der Spüleinrichtung in axialer Richtung durch die Spüleinrichtung verläuft, wobei in dem Kabelkanal ein elektrisch leitendes Kabel angeordnet ist, mit dem
- die zumindest eine Antenne mit dem WLAN-Modul oder
- das WLAN-Modul mit dem Kameramodul
gekoppelt ist.

Die Spüleinrichtung kann als monolithischer Körper ausgestaltet sein, in dem die Spüldüsen angeordnet sind und in dem der zumindest eine Wasserkanal, die Druckwassereintrittsöffnung und der Kabelkanal ausgebildet sind.

Die Abdeckung kann lösbar an der Rückseite der Spüleinrichtung angeordnet sein. Damit kann beispielsweise eine beschädigte Abdeckung einfach ausgetauscht werden.

Die Bildaufnahmeeinrichtung kann ein Gehäuse aufweisen, in dessen Inneren ein Aufnahmeraum zur Aufnahme des Kameramoduls vorgesehen ist.

Das Gehäuse ist vorzugsweise lösbar an der Spüleinrichtung angeordnet. Das Gehäuse kann an dem vorderen Ende eine koaxial zur optischen Achse des Kameramoduls angeordnete Öffnung aufweisen.

In der Öffnung kann eine Doppelglasscheibe angeordnet sein, deren Glasscheiben beabstandet zueinander angeordnet sind, wobei die beiden Glasscheiben einen im Wesentlichen druckdichten Hohlraum bilden. Die Doppelglasscheibe verschließt die Öffnung.

Das Gehäuse kann doppelwandig ausgeführt sein, wobei die beiden Wandungen des Gehäuses einen im Wesentlichen druckdichten Hohlraum bilden. Dadurch wird vermieden, dass bei einer Beschädigung der äußeren Wandung Schmutz oder Flüssigkeit in den durch die innere Wandung gebildeten Hohlraum gelangen kann.

Alternativ oder zusätzlich kann im Gehäuse eine Hülse angeordnet sein, die das Kameramodul und/oder das WLAN-Modul umgibt, wobei zwischen dem Gehäuse und der Hülse ein im Wesentlichen druckdichter Hohlraum ausgebildet ist.

Vorzugsweise sind der Hohlraum zwischen den beiden Glasscheiben und
- der Hohlraum zwischen beiden Wandungen des Gehäuses oder
- der Hohlraum zwischen dem Gehäuse und der Hülse
miteinander verbunden.

Die Hohlräume können mit einem Überdruck beaufschlagt sein, wobei zumindest einem Hohlraum ein Drucksensor zugeordnet ist. Mit dem Drucksensor kann ein Druckabfall festgestellt werden, was auf eine Beschädigung der äußeren Wandung hindeutet, insbesondere wenn die Beschädigung, etwa Haarrisse, mit dem bloßen Auge nicht erkennbar sind.

In dem Spülkopf kann ein Energiespeicher, insbesondere ein Akkumulator angeordnet sein, zum Versorgen des WLAN-Modul und des Kameramoduls mit elektrischer Energie.

In dem Spülkopf kann eine Sekundärspuleneinrichtung eines induktiven Ladesystems angeordnet sein, zum induktiven Aufladen des Energiespeichers. Damit ein vollkommen hermetischer verschlossener Spülkopf bereit gestellt werden, der auch zum Zwecke des Aufladens des integrierten Energiespeichers (z.B. Akkumulator) keine Anschlüsse benötigt. Ein vollkommen hermetisch verschlossener Spülkopf ist auch hinsichtlich des Explosionsschutzes vorteilhaft.

In dem Spülkopf kann eine Speichereinrichtung angeordnet sein, die operativ mit dem Kameramodul gekoppelt ist, zum Speichern der von dem Kameramodul bereitgestellten Bild- und/oder Videodaten.

Dem Wasserkanal kann ein Drucksensor zugeordnet sein, zum Überwachen des an der Spüleinrichtung anliegenden Wasserdruckes, wobei die Druckdaten über das WLAN-Modul an die Bedien-/Anzeigeeinrichtung übertragbar sind.

Das WLAN-Modul kann angepasst sein, Steuerdaten von der Bedien-/Anzeigeeinrichtung zu empfangen, wobei die Steuerdaten zumindest Daten zum Steuern des Kameramoduls und/oder Daten zum Steuern der Spüldüsen umfassen.

Bereit gestellt wird ferner ein Kanal- und/oder Rohrinspektionssystem umfassend eine Bedien-/Anzeigeeinrichtung und einen erfindungsgemäßen Spülkopf, wobei die von dem Kameramodul des Spülkopfes bereitgestellten Bild- und/oder Videodaten über das WLAN-Modul des Spülkopfes kabellos an die Bedien-/Anzeigeeinrichtung übertragbar sind.

### Kurzbeschreibung der Figuren

Weitere Einzelheiten und Merkmale der Erfindung sowie konkrete Ausführungsbeispiele der Erfindung ergeben sich aus der nachfolgenden Beschreibung in Verbindung mit der Zeichnung. Es zeigt:
- Fig. 1a: ein erfindungsgemäßes System mit einem erfindungsgemäßen Spülkopf und einer Bedien-/Anzeigeeinrichtung;
- Fig. 1b: einen erfindungsgemäßen Spülkopf mit austretenden Wasserstrahlen;
- Fig. 2: einen erfindungsgemäßen Spülkopf in einer perspektivischen Ansicht; und
- Fig. 3: einen erfindungsgemäßen Spülkopf in einem Längsschnitt.

### Detaillierte Beschreibung der Erfindung

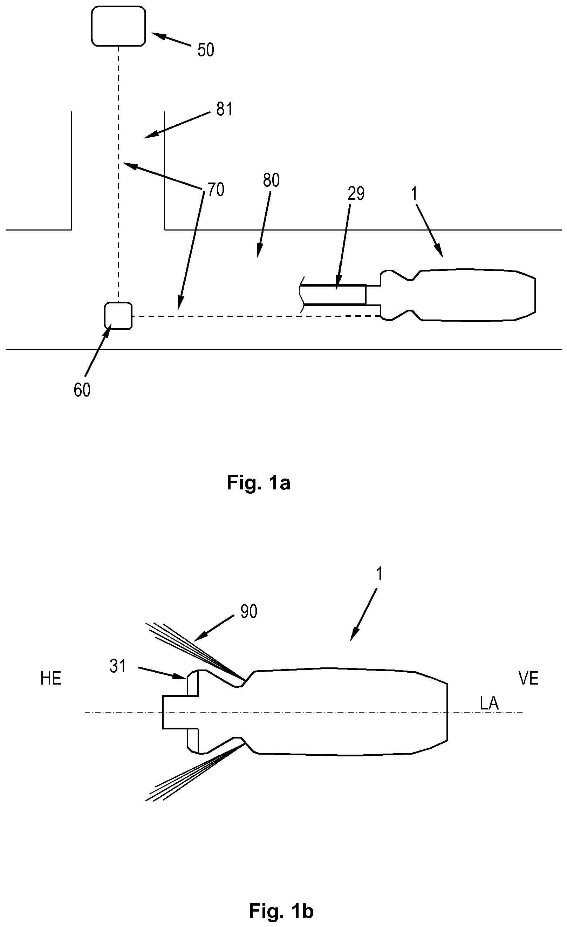

**Fig. 1a** zeigt ein erfindungsgemäßes System mit einem erfindungsgemäßen Spülkopf 1 und einer Bedien-/Anzeigeeinrichtung 50.

Der Spülkopf 1 und die Bedien-/Anzeigeeinrichtung 50 weisen jeweils ein WLAN-Modul auf, über die eine WLAN-Verbindung 70 zwischen dem Spülkopf 1 und der Bedien-/Anzeigeeinrichtung 50 eingerichtet werden kann. Über die WLAN-Verbindung 70 werden Bilddaten (z.B. Videodaten) eines an dem Spülkopf 1 angeordneten Kameramoduls an die Bedien-/Anzeigeeinrichtung 50 übertragen.

Vorzugsweise ist die WLAN-Verbindung 70 als bidirektionale Verbindung ausgestaltet, sodass auch Steuerdaten von der Bedien-/Anzeigeeinrichtung 50 an den Spülkopf 1 übertragen werden können. Mit den Steuerdaten können beispielsweise das Kameramodul (z.B. Brennweite, Beleuchtung) oder die Spüldüsen (z.B. Wasseraustrittswinkel) des Spülkopfes gesteuert werden.

Ferner kann es vorteilhaft sein, wenn das erfindungsgemäße System einen Repeater 60 aufweist. Mit dem Repeater 60 kann einerseits die Reichweite der WLAN-Verbindung erhöht werden. Andererseits kann mit dem Repeater 60 das WLAN-Signal von dem Kanal 80 in den Schacht 81 "umgelenkt" werden. Der Repeater 60 kann je nach Verwendungszweck am Boden des Schachtes 81 oder im Kanal 80 angeordnet werden.

An den Spülkopf 1 ist ein Hochdruckspülschlauch 29 angeschlossen, über dem Spülwasser dem Spülkopf zugeführt wird.

Mit dem erfindungsgemäßen System kann eine Kanalreinigung durchgeführt werden, wobei gleichzeitig das Ergebnis der Reinigung an der Bedien-/Anzeigeeinrichtung 50 begutachtet werden kann, ohne dass für die Datenübertragung von dem Spülkopf 1 zur Bedien-/Anzeigeeinrichtung 50 Kabelverbindungen notwendig sind. Durch den Verzicht auf Kabelverbindungen wird zudem der Rüstaufwand erheblich reduziert, da letztlich nur mehr der Hochdruckspülschlauch 29 mit dem daran angeordneten Spülkopf 1 in den Kanal eingebracht werden muss.

**Fig. 1b** zeigt schematisch einen erfindungsgemäßen Spülkopf 1 mit aus nach hinter gerichteten Spüldüsen austretenden Wasserstrahlen 90, wobei sich die Antenneneinheit 31 des WLAN-Moduls im wasserfreien Inneren des Wasserkegels befindet.

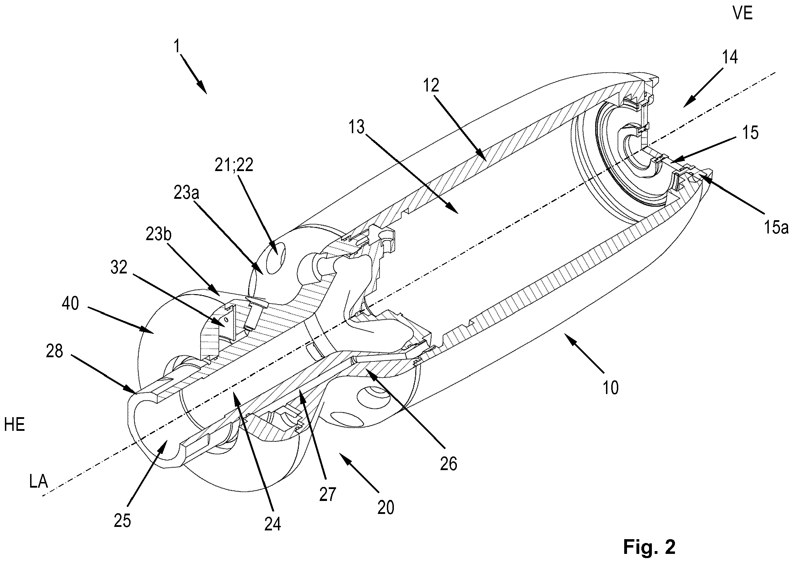

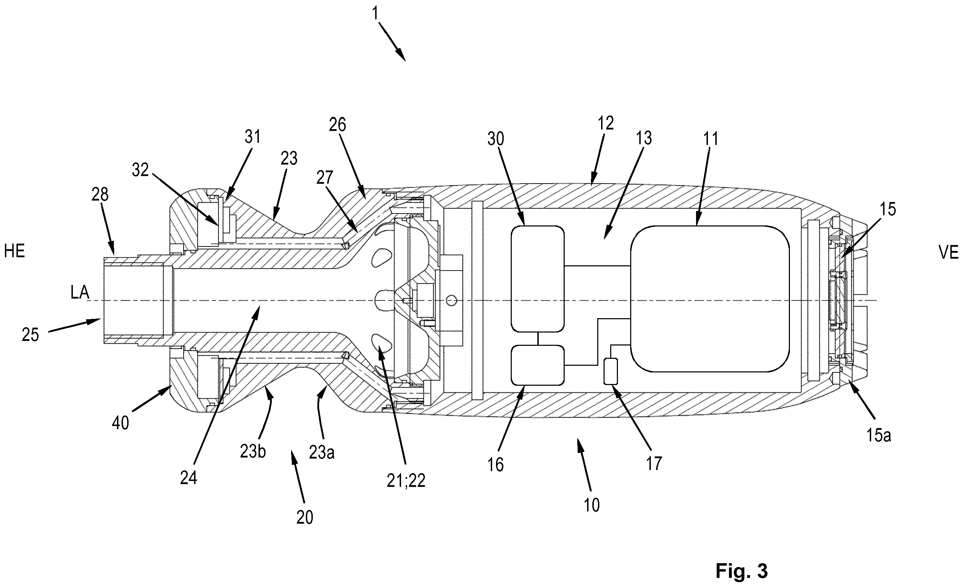

**Fig. 2** und **Fig. 3** zeigen einen erfindungsgemäßen Spülkopf 1 in einer perspektivischen Ansicht (Fig. 2) und in einem Längsschnitt entlang der Längsachse LA (Fig. 3).

Der Spülkopf 1 besteht im Wesentlichen aus drei Teilen: der Bildaufnahmeeinrichtung 10, der Spüleinrichtung 20 und der Antenneneinheit 31.

Die Bildaufnahmeeinrichtung 10 umfasst ein Gehäuse 10, das in diesem Ausführungsbeispiel im Wesentlichen zylinderförmig ausgestaltet ist und einen runden Querschnitt aufweist. Erfindungsgemäß kann das Gehäuse 10 auch einen anderen Querschnitt aufweisen, etwa einen quadratischen oder achteckigen Querschnitt. Das Gehäuse 10 ist aus einem stabilen Material, vorzugsweise Metall, insbesondere Stahl hergestellt.

An dem vorderen Ende VE weist das Gehäuse 10 eine Öffnung 14 auf, die mit einer Doppelglasscheibe 15 verschlossen ist. Die Doppelglasscheibe 15 ist von einem Haltering 15a, der aus Metall sein kann, umgeben bzw. wird in einem Haltering gehaltert. Mit dem Haltering 15a wird die Doppelglasscheibe 15 an dem vorderen Ende VE des Gehäuses befestigt, etwa mittels einer Steck- oder Gewindeverbindung. Die Befestigung der Doppelglasscheibe 15 mittels des Halteringes 15a an dem Gehäuse 10 erfolgt so, dass die Öffnung 14 weitgehend oder vollständig luft-und fluiddicht verschlossen ist.

Die Doppelglasscheibe 15 und der Haltering 15a sind so ausgestaltet, dass zwischen den beiden Glasscheiben ein druckdichter Hohlraum ausgebildet ist, der mit einem Überdruck bezogen auf den Umgebungsdruck beaufschlagt werden kann.

Das Innere des Gehäuses 12 bildet einen Aufnahmeraum 13 zur Aufnahme eines Kameramoduls 11, eines WLAN-Moduls 30, eines Akkumulators 16 und einer Speichereinrichtung 17. Mit dem Akkumulator 16 werden das Kameramodul 11 und das WLAN-Modul 30 mit elektrischer Energie versorgt. Der Akkumulator selbst kann mittels induktiver Ladetechnik aufgeladen werden. Hierzu ist in dem Spülkopf eine Sekundärspule (hier nicht gezeigt) eines induktiven Ladesystems angeordnet.

Das WLAN-Modul 30 ist operativ mit dem Kameramodul 11 gekoppelt, sodass die von dem Kameramodul 11 bereitgestellten Bild- und/oder Videodaten drahtlos an eine Bedien-/Anzeigeeinrichtung 50 übertragen werden können. Das WLAN-Modul 30 ist zudem angepasst, Steuerdaten drahtlos von der Bedien-/Anzeigeeinrichtung 50 zu empfangen, sodass etwa das Kameramodul 11 über die Bedien-/Anzeigeeinrichtung 50 drahtlos gesteuert werden kann (z.B. Einstellen der Brennweite des Kameramoduls, oder Steuern einer Beleuchtungseinrichtung des Kameramoduls).

Die Speichereinrichtung 17 ist operativ mit dem Kameramodul 11 gekoppelt und kann etwa als Speicherkarte ausgestaltet sein. Während eines Inspektions- bzw. Reinigungsvorganges können die von dem Kameramodul 11 bereitgestellten Bild-und/oder Videodaten vollständig in der Speichereinrichtung 17 gespeichert werden. Dadurch gehen selbst bei schwierigen Empfangssituationen keine Bild- und/oder Videodaten verloren. In einer Ausgestaltung kann die Speicherkarte aus dem Spülkopf entnommen werden. Alternativ kann die Speicherkarte auch über das WLAN-Modul 30 ausgelesen werden.

In einer Ausgestaltung der Erfindung ist das Gehäuse 12 doppelwandig ausgeführt. Die beiden Wandungen des Gehäuses 12 bilden dabei einen im Wesentlichen druckdichten Hohlraum, der mit einem Überdruck bezogen auf den Umgebungsdruck beaufschlagt werden kann.

In einer alternativen Ausgestaltung kann in dem Aufnahmeraum 13 eine druck- und fluiddichte Hülse angeordnet sein, wobei in der Hülse das Kameramodul 11, das WLAN-Modul 30 und die sonstigen elektronischen Komponenten 16, 17 angeordnet sind. Der zwischen der Hülse und der Wandung des Gehäuses 12 gebildete Hohlraum ist im Wesentlichen druckdicht ausgestaltet, sodass dieser mit einem Überdruck bezogen auf den Umgebungsdruck beaufschlagt werden kann.

Der zwischen den beiden Glasscheiben ausgebildete druckdichte Hohlraum ist mit dem druckdichten Hohlraum des doppelwandigen Gehäuses 12 bzw. mit dem durch die Hülse und das Gehäuse gebildeten druckdichten Hohlraum verbunden. Insgesamt wird dadurch eine Druckkapsel bereitgestellt, in der das Kameramodul 11, das WLAN-Modul 30 und die sonstigen elektronischen Komponenten 16, 17 angeordnet sind. Dem so gebildeten druckdichten Hohlraum ist ein Drucksensor zugeordnet, mit dem der Druck in dem Hohlraum permanent überwacht werden kann. Bei einem Druckabfall, etwa aufgrund einer Beschädigung der äußeren Glasscheibe der Doppelglasscheibe 15, kann dieser dem Bediener signalisiert werden, der dann den Reinigungsvorgang abbrechen kann, um weitere Beschädigungen des Spülkopfes, insbesondere aber Beschädigungen der elektronischen Komponenten zu vermeiden. Vorteilhaft ist hierbei, dass etwa bei einer Beschädigung der äußeren Glasscheibe der Doppelglasscheibe 15 lediglich in den Hohlraum Wasser oder Schmutz eintritt, während das Kameramodul 11, das WLAN-Modul 30 und die sonstigen elektronischen Komponenten 16, 17 weiterhin geschützt sind. Erst wenn beide Glasscheiben der Doppelglasscheibe 15 beschädigt sind könnte Feuchtigkeit oder Schmutz an die elektronischen Komponenten 11, 30, 16, 17 gelangen.

Mit seinem hinteren Ende wird das Gehäuse 10 an der Spüleinrichtung 20 befestigt, etwa mittels einer Steck- oder Gewindeverbindung. Die Befestigung des Gehäuses 10 an der Spüleinrichtung 20 erfolgt so, dass die hintere Öffnung (die der Spüleinrichtung 20 zugewandt Öffnung) des Gehäuses von der Spüleinrichtung 20 weitgehend oder vollständig luft- und fluiddicht verschlossen wird.

Die in dem Aufnahmeraum 13 angeordneten elektronischen Komponenten 11, 30, 16, 17 sind über Befestigungsmittel vorzugsweise lösbar an dem vorderen Ende der Spüleinrichtung 20 (das dem Gehäuse 10 zugewandte Ende) befestigt. Dadurch kann das Gehäuse 10 ohne die elektronischen Komponenten 11, 30, 16, 17 von der Spüleinrichtung 20 abgenommen bzw. entfernt werden. Sind die elektronischen Komponenten 11, 30, 16, 17 in der Hülse angeordnet, kann das Gehäuse 10 ebenfalls ohne die Hülse abgenommen werden. Ein Austausch des Gehäuses 10, etwa bei einer defekten Glasscheibe, kann so einfach und kostensparend bewerkstelligt werden.

Axial hinter dem Gehäuse 10 ist die Spüleinrichtung 20 angeordnet. Die Spüleinrichtung 20 ist einstückig bzw. monolithisch aus einem stabilen Material, etwa Stahl ausgestaltet. Die Spüleinrichtung 20 weist an dem hinteren Ende HE eine Druckwassereintrittsöffnung 25 auf, an der ein Hochdruckspülschlauch (hier nicht gezeigt) angeschlossen bzw. angekoppelt werden kann. Der Druckwassereintrittsöffnung 25 folgt ein Wasserkanal 24, der innerhalb der Spüleinrichtung 20 ausgebildet ist. Über den Wasserkanal 24 wird das der Spüleinrichtung 20 zugeführte Spülwasser den Spüldüsen 21 zugeführt. Die Spüldüsen 21 sind in radialer Richtung und beabstandet zueinander an der Spüleinrichtung 20 angeordnet. Die Spüldüsen können in dafür vorgesehene Öffnungen, die mit dem Wasserkanal 24 verbunden sind, lösbar eingebracht bzw. in diesen Öffnungen befestigt werden.

Die Mantelfläche 23 der Spüleinrichtung 20 weist die Form einer Sanduhr auf. Das heißt, dass sich die Spüleinrichtung 20 von dem hinteren Ende und von dem vorderen Ende her in axialer Richtung verjüngt. Die Spüldüsen 21 sind dabei in jenem Abschnitt 23a der Mantelfläche 23 angeordnet, der nach hinten gerichtet ist. Aufgrund der Neigung des Abschnittes 23a relativ zur Längsachse LA des Spülkopfes 1 sind die Spüldüsen 21 nach hinten gerichtet, sodass das aus den Spüldüsen 21 austretende Wasser einerseits einen Vorschub des Spülkopfes 1 in dem Kanal und beim Herausziehen des Spülkopfes 1 aus dem Kanal anderseits ein Reinigen des Kanals bewirkt.

Durch den dem Abschnitt 23a gegenüberliegenden, ebenfalls geneigten Abschnitt 23b der Mantelfläche 23 wird das hintere Ende des Spülkopfes 1 effektiv vor den mit zum Teil mehreren 100 bar aus den Spüldüsen austretenden Wasserstrahlen geschützt.

Der Schutz des hinteren Endes des Spülkopfes 1 (das Ende, an dem sich die Druckwassereintrittsöffnung 25 befindet) ist insbesondere deshalb vorteilhaft, weil an diesem hinteren Ende die Antenneneinheit 31 des WLAN-Moduls 30 angeordnet ist. Im Betrieb befindet sich die Antenneneinheit 31 des WLAN-Moduls 30 im wasserfreien Inneren des Wasserkegels 90, wie in Fig. 1b gezeigt. Dadurch wird der Einfluss des austretenden Spülwassers auf die Übertragungsqualität der WLAN-Verbindung erheblich reduziert, sodass die Sendeleistung entsprechend niedrig gehalten werden kann.

Vorteilhafter Weise ist dem Wasserkanal 24 ein Drucksensor zugeordnet, der vorzugsweise operativ mit dem WLAN-Modul gekoppelt ist. Mit diesem Drucksensor kann kontinuierlich der tatsächlich an dem Spülkopf anliegende Wasserdruck erfasst und über das WLAN-Modul 30 an die Bedien-/Anzeigeeinrichtung 50 übertragen werden. Dem Bediener wird es so ermöglicht den Wasserdruck bei Bedarf anzupassen. Ferner kann der Wasserdruck zu Dokumentationszwecken zusammen mit dem Videosignal aufgezeichnet werden, beispielsweise auf der integrierten Speichereinrichtung 17. Ferner können beispielsweise der Wasserverbrauch und die Reinigungsgeschwindigkeit an den Verschmutzungsgrad und an den Rohrzustand angepasst werden. Beschädigungen am Rohr aufgrund eines zu hohen Wasserdruckes können dadurch vermieden werden.

In der Spüleinrichtung 20, das heißt in der Wandung 26 der Spüleinrichtung 20 ist ein Kabelkanal 27 vorgesehen, der von dem hinteren Ende bis zu dem vorderen Ende der Spüleinrichtung 20 verläuft. Der Kabelkanal 27 verläuft dabei vollständig in der Wandung 26 der Spüleinrichtung 20, sodass er vollständig von dem Wasserkanal 24 getrennt ist. An dem vorderen Ende der Spüleinrichtung 20 mündet der Kabelkanal 27 in den Aufnahmeraum 13 des Gehäuses 12. Das bedeutet, dass beispielsweise bei einer Beschädigung der äußeren Glasscheibe der Doppelglasscheibe 15 kein Wasser oder Schmutz in den Kabelkanal 27 gelangen kann. In dem Kabelkanal 27 sind elektrisch leitende Kabel zum Verbinden des WLAN-Moduls 30 mit der Antenneneinheit 31 verlegt.

In einer alternativen erfindungsgemäßen Ausgestaltung des Spülkopfes 1 kann auch das WLAN-Modul 30 an dem hinteren Ende der Spüleinrichtung 20 angeordnet sein. In diesem Fall ist in dem Kabelkanal 27 ein elektrisch leitendes Kabel zum Verbinden des WLAN-Moduls 30 mit dem Kameramodul 11 verlegt.

An der Rückseite bzw. am hinteren Ende der Spüleinrichtung 20 ist bei der in Fig. 2 und Fig.3 gezeigten Ausgestaltung eine Antenneneinheit 31 des WLAN-Moduls 30 angeordnet. Die Antenne 32 der Antenneneinheit 31 ist radial um die Druckwassereintrittsöffnung 25 herum angeordnet. Anstelle einer einzelnen Antenne können auch mehrere Antennen vorgesehen sein, die beabstandet zueinander und ebenfalls radial um die Druckwassereintrittsöffnung 25 herum angeordnet sind. Das Anordnen der Antennen 32 an dem hinteren Ende der Spüleinrichtung 20 bringt mehrere Vorteile mit sich:
- mit Ausnahme des Anschlusses 28 für den Hochdruckspülschlauch kann nahezu die gesamte Fläche des hinteren Endes der Spüleinrichtung 20 als wirksame Antennenfläche verwendet werden. Partielle Abdeckungen, etwa durch Schmutz, der Antenne / Antennen wirkt sich damit nur minimal auf die Übertragungsqualität der WLAN-Verbindung aus;
- die Antenne / Antennen sind nach hinten gerichtet, ohne dass Bauteile des Spülkopfes die Antenne / Antennen abdecken;
- die Antenne / Antennen befinden sich im wasserfreien Inneren des Wasserkegels des aus den Spüldüsen austretenden Spülwassers - der Einfluss des austretenden Spülwassers auf die Übertragungsqualität der WLAN-Verbindung wird dadurch erheblich reduziert; Versuche haben gezeigt, dass die Sendeleistung im Vergleich zu einer Antenneneinheit, die hinter den Spüldüsen angeordnet ist und dieselbe wirksame Antennenfläche aufweist, im Spülbetrieb erheblich reduziert werden kann, ohne dass es zu einem Abbruch der WLAN-Verbindung kommt.

Die Antenneneinheit 31 wird mittels einer Abdeckung 40, die aus einem stabilen und vorzugsweise abriebfesten Kunststoff besteht, vor Wasser und Schmutz geschützt. Die Abdeckung 40 kann mittels einer Steck- oder Gewindeverbindung lösbar an der Spüleinrichtung 20 befestigt sein. Damit kann die Abdeckung bei Bedarf ausgetauscht werden.

Im Bereich der Antenneneinheit 31 kann zudem eine Sekundärspule eines induktiven Ladesystems angeordnet sein, um den Akkumulator 16 aufzuladen.

Der erfindungsgemäße Spülkopf 1 ermöglicht in vorteilhafter Weise eine effiziente kabellose Übertragung hochauflösender digitaler Videodaten auf die Bedien-/Anzeigeeinrichtung 50 in Echtzeit. Dadurch kann ein Reinigungsvorgang kontinuierlich und in Echtzeit überwacht werden. Zusätzliche Strom-/Datenkabel müssen nicht mitgeführt werden. Über die WLAN-Verbindung können zudem die in dem Spülkopf angeordneten elektronischen Komponenten, etwa das Kameramodul 11, von der Bedien-/Anzeigeeinrichtung 50 aus gesteuert werden. Neben den Videodaten könne auch andere Sensordaten von dem Spülkopf an die Bedien-/Anzeigeeinrichtung 50 übertragen werden. Durch die rückseitige Anordnung der Antenneneinheit 31 bzw. der Antennen 32 wird eine effiziente WLAN-Übertragung auch bei geringen Sendeleistungen gewährleistet. Durch den Verzicht von zusätzlichen Strom-/Datenkabeln können Rüstzeiten erheblich reduziert werden, was ein effizienteres Reinigen von Kanalsystemen ermöglicht.

### Bezugszeichen:

- 1: Spülkopf
- 10: Bildaufnahmeeinrichtung
- 11: Kameramodul der Bildaufnahmeeinrichtung 10
- 12: Gehäuse der Bildaufnahmeeinrichtung 10
- 13: Aufnahmeraum im Gehäuse 12
- 14: Öffnung an dem vorderen Ende des Gehäuses 12
- 15: Doppelglasscheibe
- 15a: Metallring
- 16: Akkumulator
- 17: Speichereinrichtung
- 20: Spüleinrichtung
- 21: Spüldüsen
- 22: Wasseraustrittsöffnungen der Spüldüsen 21
- 23: Mantelfläche der Spüleinrichtung 20
- 23a: nach hinten gerichteter Abschnitt der Mantelfläche 23
- 23b: nach vorne gerichteter Abschnitt der Mantelfläche 23
- 24: Wasserkanal
- 25: Druckwassereintrittsöffnung
- 26: Wandung der Spüleinrichtung 20
- 27: Kabelkanal in der Wandung 26 der Spüleinrichtung 20
- 28: Anschluss für Hochdruckspülschlauch 29
- 29: Hochdruckspülschlauch
- 30: WLAN-Modul
- 31: Antenneneinheit des WLAN-Moduls 30
- 32: Antenne der Antenneneinheit 31
- 40: Abdeckung der Antenneneinheit 31
- 50: Bedien-/Anzeigeeinrichtung
- 60: Repeater
- 70: WLAN-Verbindung
- 80: Kanal
- 81: Schacht
- 90: Wasserstrahlen
- HE: hinteres Ende des Spülkopfes 1
- VE: vorderes Ende des Spülkopfes 1

## Patentansprüche

1. Spülkopf (1) für ein Kanal- bzw. Rohrinspektionssystem, umfassend eine an dem vorderen Ende (VE) angeordnete Bildaufnahmeeinrichtung (10) und eine axial hinter der Bildaufnahmeeinrichtung (10) angeordnete Spüleinrichtung (20), wobei
- die Spüleinrichtung (20) eine Anzahl von Spüldüsen (21) aufweist, deren Wasseraustrittsöffnungen (22) auf der Mantelfläche (23) der Spüleinrichtung (20) in Umfangsrichtung beabstandet zueinander angeordnet sind, wobei die Spüldüsen (21) über zumindest einen Wasserkanal (24) mit einer an dem hinteren Ende (HE) der Spüleinrichtung (20) vorgesehenen Druckwassereintrittsöffnung (25) verbunden sind,
- in dem Spülkopf ein WLAN-Modul (30) angeordnet ist, das operativ mit einem Kameramodul (11) der Bildaufnahmeeinrichtung (10) gekoppelt ist,
- axial hinter den Spüldüsen (21) eine Antenneneinheit (31) des WLAN-Moduls (30) angeordnet ist, wobei die Antenneneinheit (31) zumindest eine Antenne (32) umfasst, wobei die zumindest eine Antenne (32) zumindest teilweise radial um die Druckwassereintrittsöffnung (25) angeordnet ist,
- die zumindest eine Antenne (32) an der Rückseite der Spüleinrichtung (20) angeordnet ist, und
- das WLAN-Modul (30) und die Antenneneinheit (31) angepasst sind, von dem Kameramodul (11) bereitgestellte Bild- und/oder Videodaten kabellos an eine Bedien-/Anzeigeeinrichtung (50) zu übertragen,
**dadurch gekennzeichnet, dass**
- an der Rückseite der Spüleinrichtung (20) eine Kunststoff aufweisende Abdeckung (40) vorgesehen ist, zum Abdecken der Antenneneinheit (31), und
- die Mantelfläche (23) der Spüleinrichtung (20) die Form einer Sanduhr aufweist, wobei sich die Spüleinrichtung (20) von dem hinteren Ende (HE) und von dem vorderen Ende (VE) her in axialer Richtung verjüngt und wobei die Wasseraustrittsöffnungen (22) der Spüldüsen (21) auf der Mantelfläche (23) des sich von dem vorderen Ende (VE) her in axialer Richtung verjüngenden, nach hinten gerichteten, Abschnittes (23a) der Spüleinrichtung (20) angeordnet sind.

2. Spülkopf nach dem vorhergehenden Anspruch, wobei das WLAN-Modul (30) axial hinter den Spüldüsen (21) oder in der Bildaufhahmeeinrichtung (10) angeordnet ist.

3. Spülkopf nach einem der vorhergehenden Ansprüche, wobei in der Wandung (26) der Spüleinrichtung (20) ein Kabelkanal (27) ausgebildet ist, der von der Rückseite der Spüleinrichtung (20) in axialer Richtung durch die Spüleinrichtung (20) verläuft, wobei in dem Kabelkanal (27) ein elektrisch leitendes Kabel angeordnet ist, mit dem
- die zumindest eine Antenne (32) mit dem WLAN-Modul (30) und/oder
- das WLAN-Modul (30) mit dem Kameramodul (11) gekoppelt ist.

4. Spülkopf nach Anspruch 3, wobei die Spüleinrichtung (20) als monolithischer Körper ausgestaltet ist, in dem die Spüldüsen (21) angeordnet sind und in dem der zumindest eine Wasserkanal (24), die Druckwassereintrittsöffnung (25) und der Kabelkanal (27) ausgebildet sind.

5. Spülkopf nach einem der vorhergehenden Ansprüche, wobei die Abdeckung (40) lösbar an der Rückseite der Spüleinrichtung (20) angeordnet ist.

6. Spülkopf nach einem der vorhergehenden Ansprüche, wobei die Bildaufhahmeeinrichtung (10) ein Gehäuse (12) aufweist, in dessen Inneren ein Aufnahmeraum (13) zur Aufnahme des Kameramoduls (11) vorgesehen ist.

7. Spülkopf nach dem vorhergehenden Anspruch, wobei das Gehäuse (12) lösbar an der Spüleinrichtung (20) angeordnet ist und/oder wobei das Gehäuse (12) an dem vorderen Ende eine koaxial zur optischen Achse des Kameramoduls (11) angeordnete Öffnung (14) aufweist.

8. Spülkopf nach dem vorhergehenden Anspruch, wobei in der Öffnung (14) eine Doppelglasscheibe (15) angeordnet ist, deren Glasscheiben beabstandet zueinander angeordnet sind, wobei die beiden Glasscheiben einen im Wesentlichen druckdichten Hohlraum bilden.

9. Spülkopf nach einem der Ansprüche 6 bis 8, wobei das Gehäuse (12) doppelwandig ausgeführt ist und wobei die beiden Wandungen des Gehäuses einen im Wesentlichen druckdichten Hohlraum bilden.

10. Spülkopf nach einem der Ansprüche 6 bis 8, wobei im Gehäuse (12) eine Hülse angeordnet ist, die das Kameramodul (11) und/oder das WLAN-Modul (30) umgibt, wobei zwischen dem Gehäuse (12) und der Hülse ein im Wesentlichen druckdichter Hohlraum ausgebildet ist.

11. Spülkopf nach Anspruch 9 oder 10, wenn vom Anspruch 8 abhängig, wobei der Hohlraum zwischen den beiden Glasscheiben (15) und der Hohlraum zwischen beiden Wandungen des Gehäuses (12) oder der Hohlraum zwischen dem Gehäuse (12) und der Hülse miteinander verbunden sind.

12. Spülkopf nach Anspruch 9 oder 10 oder 11, wenn vom Anspruch 8 abhängig, wobei der Hohlraum zwischen den beiden Glasscheiben (15) und/oder der Hohlraum zwischen beiden Wandungen des Gehäuses (12) oder der Hohlraum zwischen dem Gehäuse (12) und der Hülse mit einem Überdruck beaufschlagt ist und wobei zumindest einem Hohlraum ein Drucksensor zugeordnet ist.

13. Spülkopf nach einem der vorhergehenden Ansprüche, wobei in dem Spülkopf ein Energiespeicher, insbesondere ein Akkumulator (16) angeordnet ist, zum Versorgen des WLAN-Modul (30) und des Kameramoduls (11) mit elektrischer Energie, wobei in dem Spülkopf vorzugsweise eine Sekundärspuleneinrichtung eines induktiven Ladesystems angeordnet ist, zum induktiven Aufladen des Energiespeichers (16) und/oder wobei das WLAN-Modul (30) angepasst ist, Steuerdaten von der Bedien-/Anzeigeeinrichtung (50) zu empfangen, wobei die Steuerdaten Daten zum Steuern des Kameramoduls (11) und/oder Daten zum Steuern der Spüldüsen (21) umfassen.

14. Kanal- und/oder Rohrinspektionssystem umfassend eine Bedien-/Anzeigeeinrichtung (50) und einen Spülkopf (1) nach einem der vorhergehenden Ansprüche, wobei die von dem Kameramodul (11) des Spülkopfes (1) bereitgestellten Bild- und/oder Videodaten über das WLAN-Modul (30) des Spülkopfes (1) kabellos an die Bedien-/Anzeigeeinrichtung (50) übertragbar sind.

## Claims

1. Flushing head (1) for a sewer or pipe inspection system, comprising an image capturing device (10) arranged at the front end (VE) and a flushing device (20) arranged axially behind the image capturing device (10),
- the flushing device (20) having a number of flushing nozzles (21), the water outlet openings (22) of which are arranged at a distance from one another in the circumferential direction on the lateral surface (23) of the flushing device (20), the flushing nozzles (21) being connected via at least one water channel (24) to a pressurized water inlet opening (25) provided at the rear end (HE) of the flushing device (20),
- a WLAN module (30) being arranged in the flushing head and operatively coupled to a camera module (11) of the image capturing device (10),
- an antenna unit (31) of the WLAN module (30) being arranged axially behind the flushing nozzles (21), the antenna unit (31) comprising at least one antenna (32), the at least one antenna (32) being arranged radially around the pressurized water inlet opening (25) at least in part,
- the at least one antenna (32) being arranged on the rear face of the flushing device (20), and
- the WLAN module (30) and the antenna unit (31) being adapted to wirelessly transmit image and/or video data provided by the camera module (11) to an operating/display device (50), **characterized in that**
- a cover (40) comprising a plastics material is provided on the rear face of the flushing device (20), in order to cover the antenna unit (31), and
- the lateral surface (23) of the flushing device (20) is in the shape of an hourglass, the flushing device (20) tapering in the axial direction from the rear end (HE) and from the front end (VE), and the water outlet openings (22) in the flushing nozzles (21) being arranged on the lateral surface (23) of the rearwardly directed portion (23a) of the flushing device (20) that narrows in the axial direction from the front end (VE).

2. Flushing head according to the preceding claim, wherein the WLAN module (30) is arranged axially behind the flushing nozzles (21) or in the image capturing device (10).

3. Flushing head according to either of the preceding claims, wherein a cable channel (27) is formed in the wall (26) of the flushing device (20), which channel extends axially from the rear face of the flushing device (20) through the flushing device (20), wherein an electrically conductive cable is arranged in the cable channel (27), by means of which cable
- the at least one antenna (32) is coupled to the WLAN module (30) and/or
- the WLAN module (30) is coupled to the camera module (11).

4. Flushing head according to claim 3, wherein the flushing device (20) is designed as a monolithic body in which the flushing nozzles (21) are arranged and in which the at least one water channel (24), the pressurized water inlet opening (25) and the cable channel (27) are formed.

5. Flushing head according to any of the preceding claims, wherein the cover (40) is detachably arranged on the rear face of the flushing device (20).

6. Flushing head according to any of the preceding claims, wherein the image capturing device (10) has a housing (12), in the interior of which a receptacle space (13) for receiving the camera module (11) is provided.

7. Flushing head according to the preceding claim, wherein the housing (12) is detachably arranged on the flushing device (20) and/or wherein the housing (12) has an opening (14) on the front end that is arranged coaxially to the optical axis of the camera module (11).

8. Flushing head according to the preceding claim, wherein a double glass pane (15) is arranged in the opening (14), the glass panes of which are arranged spaced apart from one another, wherein the two glass panes form a substantially pressure-tight cavity.

9. Flushing head according to any of claims 6 to 8, wherein the housing (12) is double-walled and wherein the two walls of the housing form a substantially pressure-tight cavity.

10. Flushing head according to any of claims 6 to 8, wherein a sleeve is arranged in the housing (12), which sleeve surrounds the camera module (11) and/or the WLAN module (30), wherein a substantially pressure-tight cavity is formed between the housing (12) and the sleeve.

11. Flushing head according to either claim 9 or claim 10 when dependent on claim 8, wherein the cavity between the two glass panes (15) and the cavity between the two walls of the housing (12) or the cavity between the housing (12) and the sleeve are interconnected.

12. Flushing head according to claim 9 or claim 10 or claim 11 when dependent on claim 8, wherein the cavity between the two glass panes (15) and/or the cavity between the two walls of the housing (12) or the cavity between the housing (12) and the sleeve is subjected to an overpressure and wherein a pressure sensor is associated with at least one cavity.

13. Flushing head according to any of the preceding claims, wherein an energy store, in particular an accumulator (16), is arranged in the flushing head in order to supply electrical energy to the WLAN module (30) and to the camera module (11), wherein a secondary coil device of an inductive charging system is preferably arranged in the flushing head in order to inductively charge the energy store (16), and/or wherein the WLAN module (30) is adapted to receive control data from the operating/display device (50), wherein the control data comprise data for controlling the camera module (11) and/or data for controlling the flushing nozzles (21).

14. Sewer and/or pipe inspection system comprising an operating/display device (50) and a flushing head (1) according to any of the preceding claims, wherein the image and/or video data provided by the camera module (11) of the flushing head (1) can be wirelessly transmitted to the operating/display device (50) via the WLAN module (30) of the flushing head (1).

## Revendications

1. Tête de rinçage (1) d'un système d'inspection de conduites ou de tuyauteries, comprenant un dispositif de capture d'image (10) disposé à l'extrémité avant (VE) et un dispositif de rinçage (20) disposé axialement derrière le dispositif de capture d'image (10), dans laquelle
- le dispositif de rinçage (20) présente un certain nombre de buses de rinçage (21) dont les ouvertures de sortie d'eau (22) sont disposées sur la surface extérieure (23) du dispositif de rinçage (20) de manière espacée les unes des autres dans la direction périphérique, les buses de rinçage (21) étant reliées par au moins une conduite d'eau (24) à une ouverture d'entrée d'eau sous pression (25) prévue à l'extrémité arrière (HE) du dispositif de rinçage (20),
- un module WLAN (30) est disposé dans la tête de rinçage et étant couplé en fonctionnement à un module de caméra (11) du dispositif de capture d'image (10),
- une unité d'antenne (31) du module WLAN (30) est disposée axialement derrière les buses de rinçage (21), l'unité d'antenne (31) comprenant au moins une antenne (32), l'au moins une antenne (32) étant disposée au moins partiellement radialement autour de l'ouverture d'entrée d'eau sous pression (25),
- l'au moins une antenne (32) est disposée à l'arrière du dispositif de rinçage (20), et
- le module WLAN (30) et l'unité d'antenne (31) sont adaptés pour transférer sans fil des données d'image et/ou vidéo fournies par le module de caméra (11) à un dispositif de commande/d'affichage (50),
**caractérisée en ce**
- **qu'**un couvercle (40) comprenant une matière plastique est prévu à l'arrière du dispositif de rinçage (20) pour recouvrir l'unité d'antenne (31), et en ce
- **que** la surface extérieure (23) du dispositif de rinçage (20) présente la forme d'un sablier, le dispositif de rinçage (20) se rétrécissant dans la direction axiale depuis l'extrémité arrière (HE) et depuis l'extrémité avant (VE), et les ouvertures de sortie d'eau (22) des buses de rinçage (21) étant disposées sur la surface extérieure (23) de la section (23a) du dispositif de rinçage (20) se rétrécissant depuis l'extrémité avant (VE) dans la direction axiale et orientée vers l'arrière.

2. Tête de rinçage selon la revendication précédente, dans laquelle le module WLAN (30) est disposé axialement derrière les buses de rinçage (21) ou dans le dispositif de capture d'image (10).

3. Tête de rinçage selon l'une des revendications précédentes, dans laquelle une goulotte de câbles (27) est formée dans la paroi (26) du dispositif de rinçage (20), laquelle goulotte de câbles traverse axialement le dispositif de rinçage (20) depuis l'arrière du dispositif de rinçage (20), un câble électroconducteur étant disposé dans la goulotte de câbles (27), ledit câble électroconducteur étant couplé
- à l'au moins une antenne (32) comportant le module WLAN (30) et/ou
- au module WLAN (30) comportant le module de caméra (11).

4. Tête de rinçage selon la revendication 3, dans laquelle le dispositif de rinçage (20) est conçu comme un corps monolithique dans lequel sont disposées les buses de rinçage (21) et dans lequel sont formés l'au moins une conduite d'eau (24), l'ouverture d'entrée d'eau sous pression (25) et la goulotte de câbles (27).

5. Tête de rinçage selon l'une des revendications précédentes, dans laquelle le couvercle (40) est disposé de manière amovible à l'arrière du dispositif de rinçage (20).

6. Tête de rinçage selon l'une des revendications précédentes, dans laquelle le dispositif de capture d'image (10) comporte un boîtier (12) à l'intérieur duquel est prévu un espace de réception (13) destiné à la réception du module de caméra (11).

7. Tête de rinçage selon la revendication précédente, dans laquelle le boîtier (12) est disposé de manière amovible au niveau du dispositif de rinçage (20) et/ou le boîtier (12) présente à son extrémité avant une ouverture (14) disposée coaxialement à l'axe optique du module de caméra (11).

8. Tête de rinçage selon la revendication précédente, dans laquelle un double vitrage (15) est disposé dans l'ouverture (14), les vitres dudit double vitrage étant disposées de manière espacée l'une de l'autre, les deux vitres formant une cavité sensiblement étanche à la pression.

9. Tête de rinçage selon l'une des revendications 6 à 8, dans laquelle le boîtier (12) est à double paroi et les deux parois du boîtier forment une cavité sensiblement étanche à la pression.

10. Tête de rinçage selon l'une des revendications 6 à 8, dans laquelle une douille est disposée dans le boîtier (12), laquelle douille entoure le module de caméra (11) et/ou le module WLAN (30), une cavité sensiblement étanche à la pression étant formée entre le boîtier (12) et la douille.

11. Tête de rinçage selon la revendication 9 ou 10, lorsqu'elle dépend de la revendication 8, dans laquelle la cavité se trouvant entre les deux vitres (15) et la cavité se trouvant entre les deux parois du boîtier (12) ou la cavité se trouvant entre le boîtier (12) et la douille sont reliées les unes aux autres.

12. Tête de rinçage selon la revendication 9 ou 10 ou 11, lorsqu'elle dépend de la revendication 8, dans laquelle la cavité se trouvant entre les deux vitres (15) et/ou la cavité se trouvant entre les deux parois du boîtier (12) ou la cavité se trouvant entre le boîtier (12) et la douille est soumise à une surpression, et dans laquelle un capteur de pression est associé à au moins une cavité.

13. Tête de rinçage selon l'une des revendications précédentes, dans laquelle un dispositif de stockage d'énergie, en particulier un accumulateur (16), est disposé dans la tête de rinçage pour fournir de l'énergie électrique au module WLAN (30) et au module de caméra (11), dans laquelle de préférence un dispositif de rinçage secondaire d'un système de chargement par induction est disposé dans la tête de rinçage, pour recharger par induction le dispositif de stockage d'énergie (16) et/ou dans laquelle le module WLAN (30) est conçu pour recevoir les données de commande du dispositif de commande/d'affichage (50), les données de commande comprenant des données de commande du module de caméra (11) et/ou des données de commande des buses de rinçage (21).

14. Système d'inspection de conduites et/ou de tuyauteries, comprenant un dispositif de commande/d'affichage (50) et une tête de rinçage (1) selon l'une des revendications précédentes, les données d'image et/ou vidéo fournies par le module de caméra (11) de la tête de rinçage (1) pouvant être transférées sans fil au dispositif de commande/d'affichage (50) par l'intermédiaire du module WLAN (30) de la tête de rinçage (1).
